# EUROPEAN PATENT APPLICATION

(11) **EP 4 819 587 A1**
(43) Date of publication of application: **07.10.2026**
(21) Application number: 24900918.4
(22) Date of filing: 18.11.2024
(51) Int. Cl.: H04L 67/125, H01M 10/42, G01R 31/385, G01R 19/165, H04L 12/40, H04W 84/20

(54) **BATTERY SYSTEM**

(30) Priority: 06.12.2023 US 202318530522
(71) Applicant: LG Energy Solution, Ltd., Seoul 07335 (KR)
(72) Inventor: NAGALURU, Sagar, Rochester Hills, Michigan 48309 (US); BHARANE, Nitin, Rochester Hills, Michigan 48307 (US); VANKINENI, Sandeep, Warren, Michigan 48092 (US); JAMPANI, Bhavya, Warren, Michigan 48092 (US)
(74) Representative: Goddar, Heinz J.
(86) International application number: PCT/KR2024/018172
(87) International publication number: WO 2025/121731

(57) **Abstract**

A battery system includes a battery subpack having first and second battery cells, a cell monitoring circuit, an RF transmitter, an RF receiver, a subpack microprocessor, and a first transceiver. The circuit measures a voltage of a first battery cell. The system includes a master controller having a second transceiver. The RF transmitter sends a voltage value corresponding to the voltage of the first battery cell to the RF receiver. The subpack microprocessor determines the first battery cell has an overvoltage condition based on the voltage value and sends an overvoltage message to the master controller via the first and second transceivers. The subpack microprocessor induces first and second subpack contactors to each have an open operational state when the master controller sends an open command to the subpack microprocessor.

## Description

### TECHNICAL FIELD

The present disclosure relates to a battery system, and more particularly, to a battery system capable of effectively managing and controlling a plurality of battery cells using wireless communication.

This application claims priority to and the benefit of U.S. Application No. 18/530,522, filed on December 6, 2023, the disclosure of which is incorporated herein by reference.

### BACKGROUND ART

A vehicle battery pack typically has a plurality of battery subpacks electrically connected in parallel to one another. Each battery subpack has a monitoring circuit that monitors the parameters of batteries in the battery subpack and a plurality of cables attached between the monitoring circuit and the subpack microprocessor. Each battery in the battery subpack has an associated cable attached between the monitoring circuit and the subpack controller. Since there can be numerous batteries in each battery subpack, the number of cables in the battery pack can be relatively large which undesirably results in a relatively large battery pack housing and increased weight.

Further, the vehicle battery pack typically has a master controller that receives messages from subpack microprocessors in the battery subpacks. The master controller can electrically disconnect battery subpacks from a vehicle powertrain utilizing battery pack contactors. However, the battery subpacks do not have battery subpack contactors to disconnect individual battery subpacks from a remaining portion of the battery subpacks when degraded operation occurs in a respective battery subpack.

The inventors herein have recognized a need for an improved battery system wherein each battery subpack utilizes an RF transmitter and RF receiver to communicate between a cell monitoring circuit and a subpack microprocessor instead of using cables therebetween which reduces a weight of the battery pack. Further, each battery subpack has battery subpack contactors which can disconnect the battery subpack from a remaining portion of the battery subpacks.

### DISCLOSURE

### Technical Problem

A battery system according to aspects of the disclosure is provided. The battery system includes a battery subpack having first and second battery cells electrically connected in series to one another, a cell monitoring circuit, an RF (i.e., radio frequency) transmitter, an RF receiver, a subpack microprocessor, and a first transceiver. The cell monitoring circuit is operably connected to the first and second battery cells and the RF transmitter. The subpack microprocessor is operably connected to the RF receiver and the first transceiver. The cell monitoring circuit measures a voltage of the first battery cell. The battery system further includes a master controller having a second transceiver that communicates with the first transceiver. The RF transmitter of the battery subpack sends a voltage value corresponding to the voltage of the first battery cell to the RF receiver. The subpack microprocessor receives the voltage value from the RF receiver and determines the first battery cell has an overvoltage condition based on the voltage value. The subpack microprocessor sends an overvoltage message to the master controller via the first and second transceivers. The subpack microprocessor induces first and second subpack contactors to each have an open operational state when the master controller sends an open command to the subpack microprocessor via the first and second transceivers.

A battery system according to other aspects of the disclosure is provided. The battery system includes a battery subpack having first and second battery cells electrically connected in series to one another, a cell monitoring circuit, an RF transmitter, an RF receiver, a subpack microprocessor, and a first transceiver. The cell monitoring circuit is operably connected to the first and second battery cells and the RF transmitter. The subpack microprocessor is operably connected to the RF receiver and the first transceiver. The cell monitoring circuit measures a voltage of the first battery cell. The battery system includes a master controller having a second transceiver that communicates with the first transceiver. The RF transmitter of the battery subpack sends a voltage value corresponding to the voltage of the first battery cell to the RF receiver. The subpack microprocessor receives the voltage value from the RF receiver and determines the first battery cell has an overvoltage condition based on the voltage value. The subpack microprocessor sends an overvoltage message to the master controller via the first and second transceivers. The subpack microprocessor induces first and second subpack contactors to each have the open operational state when no open command is received from the master controller within a predetermined time after sending the overvoltage message.

A battery system according to other aspects of the disclosure is provided. The battery system includes a battery subpack having first and second battery cells electrically connected in series to one another, a cell monitoring circuit, an RF transmitter, an RF receiver, a subpack microprocessor, and a first transceiver. The cell monitoring circuit is operably connected to the first and second battery cells and the RF transmitter. The subpack microprocessor is operably connected to the RF receiver and the first transceiver. The cell monitoring circuit measures a voltage of the first battery cell. The battery system includes a master controller having a second transceiver that communicates with the first transceiver. The RF transmitter of the battery subpack sends a voltage value corresponding to the voltage of the first battery cell to the RF receiver. The subpack microprocessor receives the voltage value from the RF receiver and determines the first battery cell has an overvoltage condition based on the voltage value. The subpack microprocessor sends an overvoltage message to the master controller via the first and second transceivers. The subpack microprocessor induces first and second subpack contactors to each have an open operational state when the master controller sends an open command to the subpack microprocessor via the first and second transceivers or when no open command is received from the master controller within a predetermined time after sending the overvoltage message.

### Technical Solution

A battery system according to one aspect of the present disclosure may comprise a battery subpack having first and second battery cells electrically connected in series to one another, a cell monitoring circuit, an RF transmitter, an RF receiver, a subpack microprocessor, and a first transceiver; and a master controller having a second transceiver that communicates with the first transceiver.

The cell monitoring circuit may be operably connected to the first and second battery cells and the RF transmitter.

The subpack microprocessor may be operably connected to the RF receiver and the first transceiver.

The cell monitoring circuit may measure a voltage of the first battery cell;

The RF transmitter of the battery subpack may send a voltage value corresponding to the voltage of the first battery cell to the RF receiver.

The subpack microprocessor may receive the voltage value from the RF receiver and determine the first battery cell has an overvoltage condition based on the voltage value.

The subpack microprocessor may send an overvoltage message to the master controller via the first and second transceivers.

The subpack microprocessor may induce first and second subpack contactors to each have an open operational state when the master controller sends an open command to the subpack microprocessor via the first and second transceivers.

The first subpack contactor may be connected to a positive terminal of the first battery cell.

The second subpack contactor may be connected to a negative terminal of the second battery cell.

The subpack microprocessor may induce the first and second subpack contactors to each have the open operational state when no open command is received from the master controller within a predetermined time after sending the overvoltage message.

The subpack microprocessor may determine the first battery cell has the overvoltage condition when the voltage value is greater than a threshold voltage value.

The master controller may send the open command to the subpack microprocessor via the first and second transceivers when the master controller receives the overvoltage message.

The battery system may further comprise a first pack contactor electrically connected to the first subpack contactor; and a second pack contactor electrically connected to the second subpack contactor.

The master controller may have a master microprocessor operably connected to the second transceiver.

The second transceiver may operably communicate with the first transceiver.

The first transceiver may be a first CAN transceiver.

The second transceiver may be a second CAN transceiver.

The master controller may send a reduced performance message to a vehicle controller when the first and second subpack contactors each have the open operational state.

A battery system according to another aspect of the present disclosure may comprise a battery subpack having first and second battery cells electrically connected in series to one another, a cell monitoring circuit, an RF transmitter, an RF receiver, a subpack microprocessor, and a first transceiver; and a master controller having a second transceiver that communicates with the first transceiver.

The cell monitoring circuit may be operably connected to the first and second battery cells and the RF transmitter.

The subpack microprocessor may be operably connected to the RF receiver and the first transceiver.

The cell monitoring circuit may measure a voltage of the first battery cell.

The RF transmitter of the battery subpack may send a voltage value corresponding to the voltage of the first battery cell to the RF receiver.

The subpack microprocessor may receive the voltage value from the RF receiver and determine the first battery cell has an overvoltage condition based on the voltage value.

The subpack microprocessor may send an overvoltage message to the master controller via the first and second transceivers.

The subpack microprocessor may induce first and second subpack contactors to each have an open operational state when no open command is received from the master controller within a predetermined time after sending the overvoltage message.

The battery system may further comprise a first subpack contactor connected to a positive terminal of the first battery cell; and a second subpack contactor connected to a negative terminal of the second battery cell.

The subpack microprocessor may determine the first battery cell has the overvoltage condition when the voltage value is greater than a threshold voltage value.

The master controller may send the open command to the subpack microprocessor via the first and second transceivers when the master controller receives the overvoltage message.

The battery system may further comprise a first pack contactor electrically connected to the first subpack contactor; and a second pack contactor electrically connected to the second subpack contactor.

The master controller may have a master microprocessor operably connected to the second transceiver.

The second transceiver may operably communicate with the first transceiver.

The first transceiver may be a first CAN transceiver.

The second transceiver may be a second CAN transceiver.

The master controller may send a reduced performance message to a vehicle controller when the first and second subpack contactors each have the open operational state.

A battery system according to still another aspect of the present disclosure may comprises a battery subpack having first and second battery cells electrically connected in series to one another, a cell monitoring circuit, an RF transmitter, an RF receiver, a subpack microprocessor, and a first transceiver; and a master controller having a second transceiver that communicates with the first transceiver.

The cell monitoring circuit may be operably connected to the first and second battery cells and the RF transmitter.

The subpack microprocessor may be operably connected to the RF receiver and the first transceiver.

The cell monitoring circuit may measure a voltage of the first battery cell.

The RF transmitter of the battery subpack may send a voltage value corresponding to the voltage of the first battery cell to the RF receiver.

The subpack microprocessor may receive the voltage value from the RF receiver and determine the first battery cell has an overvoltage condition based on the voltage value.

The subpack microprocessor may send an overvoltage message to the master controller via the first and second transceivers.

The subpack microprocessor may induce first and second subpack contactors to each have an open operational state when the master controller sends an open command to the subpack microprocessor via the first and second transceivers or when no open command is received from the master controller within a predetermined time after sending the overvoltage message.

The subpack microprocessor may determine the first battery cell has the overvoltage condition when the voltage value is greater than a threshold voltage value.

The master controller may send the open command to the subpack microprocessor via the first and second transceivers when the master controller receives the overvoltage message.

The first transceiver may be a first CAN transceiver.

The second transceiver may be a second CAN transceiver.

The battery system may further comprise a first pack contactor electrically connected to the first subpack contactor; and a second pack contactor electrically connected to the second subpack contactor.

The master controller may send a reduced performance message to a vehicle controller when the first and second subpack contactors each have the open operational state.

### Advantageous Effects

According to one aspect of the present disclosure, the battery system may effectively reduce the weight and volume of the battery pack by eliminating communication cables by using an RF transmitter and receiver for communication between a cell monitoring circuit and a subpack microprocessor.

In addition, according to one aspect of the present disclosure, the battery system may operate each battery subpack independently, so that only the battery subpack in which an overvoltage condition has occurred may be selectively isolated, thereby maintaining normal operation of the remaining battery subpacks, thereby minimizing performance degradation of the entire battery system and maintaining a stable power supply.

The effects of the present invention are not limited to the effects mentioned above, and other effects not mentioned will be clearly understood by those skilled in the art from the description of the claims.

### DESCRIPTION OF DRAWINGS

The accompanying drawings illustrate exemplary aspects of the present disclosure and, together with the following detailed description, serve to provide further understanding of the technical spirit of the present disclosure. However, the present disclosure is not to be construed as being limited to the drawings.
FIG. 1 is a schematic of a vehicle having a battery system according to aspects of the disclosure;
FIG. 2 is a block diagram of a microprocessor utilized in the vehicle of FIG. 1;
FIGS. 3-5 are flowcharts of a method of operating the battery system of FIG. 1;
FIG. 6 is a flowchart implemented by a master controller in the vehicle of FIG. 1;
FIGS. 7 and 8 are flowcharts implemented by a first battery subpack in the vehicle of FIG. 1;
FIG. 9 is a flowchart implemented by a vehicle controller in the vehicle of FIG. 1.

### BEST MODE

It should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a most preferred example for the purpose of illustrations only, not intended to limit the scope of the disclosure, so it should be understood that other equivalents and modifications could be made thereto without departing from the scope of the disclosure.

In addition, when explaining the present disclosure, if it is judged that the detailed description of the related known structure or function may obscure the main point of the present disclosure, the detailed description will be omitted.

The terms including the ordinal number such as "first", "second" and the like, may be used to distinguish one element from another among various elements, but not intended to limit the elements by the terms.

Throughout the specification, when a portion is referred to as "comprising" or "including" any element, it means that the portion may include other elements further, without excluding other elements, unless specifically stated otherwise.

In addition, throughout the specification, when a portion is referred to as being "connected" to another portion, it is not limited to the case that they are "directly connected", but it also includes the case where they are "indirectly connected" with another element being interposed between them.

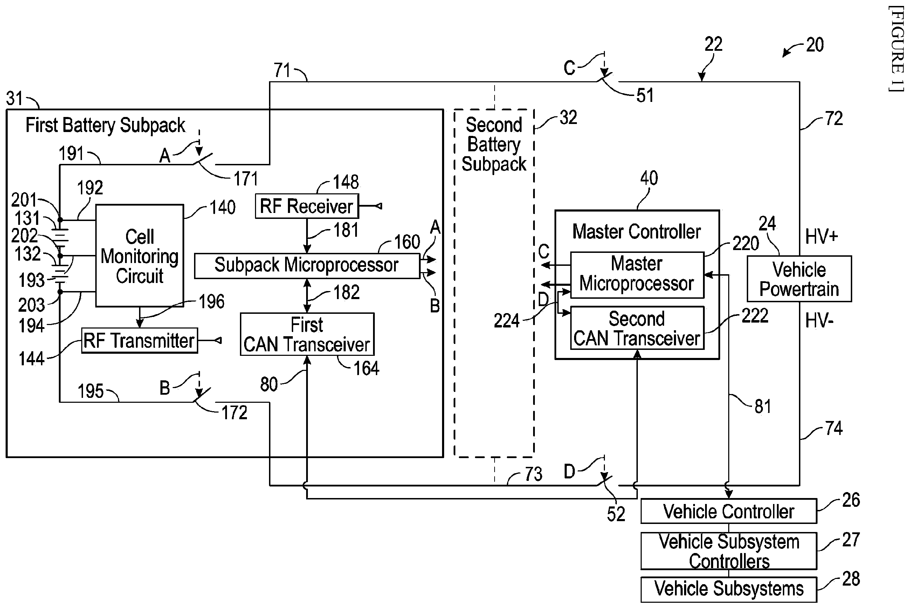

FIG. 1 is a schematic of a vehicle having a battery system according to aspects of the disclosure.

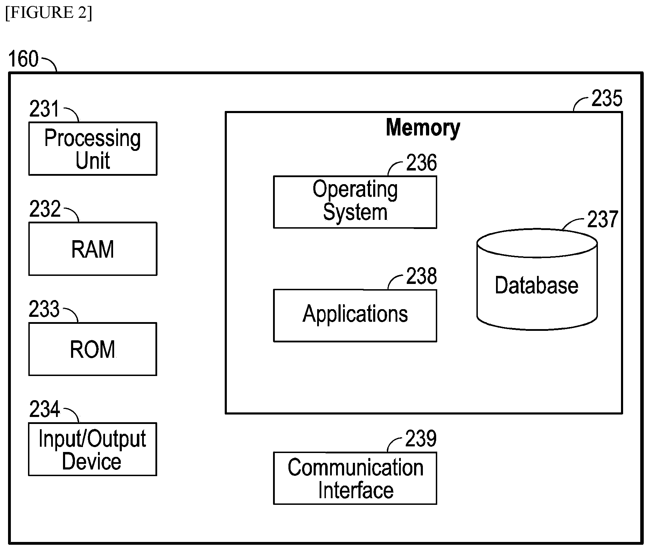

FIG. 2 is a block diagram of a microprocessor utilized in the vehicle of FIG. 1.

Referring to FIGS. 1-2, a vehicle 20 having a battery system 22, a vehicle powertrain 24, a vehicle controller 26, vehicle subsystem controllers 27, and vehicle subsystems 28 is provided.

The term "contactor" means an electrically controlled switch used for switching an electrical power circuit. A contactor can conduct a relatively large electrical current therethrough that is useful in electric vehicle applications.

The term "RF signal" means a radio frequency signal. In particular, an RF signal is transmitted across space without the need for electrical wires.

The battery system 22 provides electrical energy to the vehicle powertrain 24 in response to commands from the vehicle controller 26. The battery system 22 includes a first battery subpack 31, a second battery subpack 32, a master controller 40, a first pack contactor 51, a second pack contactor 52, electrical lines 71, 72, 73, 74, a communication bus 80, and a communication bus 81.

An advantage of the battery system 22 is that the first battery subpack 31 determines if an overvoltage condition has occurred in the first battery subpack 31 and can electrically disconnect itself from the second battery subpack 32 and the vehicle powertrain 24 if the overvoltage condition has occurred by opening first and second subpack contactors 171, 172. Thus, a vehicle driver can have a greater vehicle range with the battery system 22 as compared to other systems that would merely open a pair of pack contactors to disconnect an entire battery system from a vehicle powertrain when an overvoltage condition occurred in a single battery subpack, resulting in no power being supplied to an electric vehicle. Further, another advantage of the battery system 22 is that each battery subpack utilizes an RF transmitter and RF receiver to communicate between a cell monitoring circuit and a subpack microprocessor instead of using communication cables therebetween which reduces a weight of the battery pack and decreases an amount of space required for the battery subpacks.

The first battery subpack 31 is electrically connected in parallel to the second battery subpack 32. The first battery subpack 31 includes a first battery cell 131, a second battery cell 132, a cell monitoring circuit 140, an RF transmitter 144, an RF receiver 148, a subpack microprocessor 160, a first CAN (i.e., Controller Area Network) transceiver 164, a first subpack contactor 171, a second subpack contactor 172, communication buses 181, 182, electrical lines 191, 192, 193, 194, 195, 196 and electrical nodes 201, 202, 203.

The first and second battery cells 131, 132 are electrically connected in series to one another and are provided to output an operational voltage therefrom. In particular, the first battery cell 131 has a positive terminal electrically connected to the electrical node 201 and the electrical line 191. Further, the first battery cell 131 has a negative terminal that is electrically connected to the electrical node 202 and the electrical line 193. The second battery cell 132 has a positive terminal electrically connected to the electrical node 202 and the electrical line 193. Further, the second battery cell 132 is a negative terminal electrically connected to the electrical node 203, the electrical line 194, and the electrical line 195. Of course, alternately additional battery cells could be electrically connected in series with the first and second battery cells 131, 132.

The cell monitoring circuit 140 is electrically connected to the electrical lines 192, 193, 194, and to the RF transmitter 144 via the electrical line 196. The cell monitoring circuit 140 is provided to measure a voltage that is output by the first battery cell 131 and a voltage output by the second battery cell 132. In particular, the cell monitoring circuit 140 measures the voltage output by the first battery cell 131 utilizing the electrical lines 192, 193 and sends a voltage value corresponding to the voltage of the first battery cell 131 to the RF transmitter 144. The RF transmitter 144 transmits an RF signal with the voltage value therein to the RF receiver 148. Further, the cell monitoring circuit 140 measures the voltage output by the second battery cell 132 utilizing the electrical lines 193, 194 and sends a voltage value corresponding to the voltage of the second battery cell 132 to the RF transmitter 144. The RF transmitter 144 transmits an RF signal with the voltage value therein to the RF receiver 148.

The RF receiver 148 is provided to receive RF signals from the RF transmitter 144 having voltage values therein and to send the voltage values to the subpack microprocessor 160. The RF receiver 148 operably communicates with the subpack microprocessor 160 via the communication bus 181.

The subpack microprocessor 160 is provided to monitor the voltages of the first and second battery cells 131, 132, to communicate messages to the master controller 40, and to control an operational state of each of the first and second subpack contactors 171, 172. The subpack microprocessor 160 is operably connected to the RF receiver 148, the first CAN transceiver 164, the first subpack contactor 171, and the second subpack contactor 172. In particular, the subpack microprocessor 160 operably communicates with the RF receiver 148 via the communication bus 181. Further, the subpack microprocessor 160 operably communicates with the first CAN transceiver 164 via the communication bus 182.

Referring to FIG. 2, the subpack microprocessor 160 includes a processing unit 231 for controlling overall operation of the microprocessor 160 and its associated components, including random access memory (RAM) 232, read only memory (ROM) 233, input/output device 234, communication interface 239, and memory 235. A data bus may interconnect the processing unit 231, the RAM 232, the ROM 233, the memory 235, the I/O device 234 and the communication interface 239.

Software may be stored within the memory 235 to provide instructions to the processing unit 231 allowing the microprocessor 160 to perform various actions. The memory 235 may store software used by the microprocessor 160 such as an operating system 236, application programs 238, and an associated internal database 237. The various hardware memory units in the memory 235 may include volatile and nonvolatile, removable and non-removable media implemented in any method or technology for storage of information such as computer-readable instructions, data structures, program modules, or other data. The memory 235 may include one or more physical persistent memory devices and/or one or more non-persistent memory devices. The memory 235 may include, but is not limited to, the RAM 232, the ROM 233, an electronically erasable programmable read only memory (EEPROM), flash memory or any other medium that may be used to store the desired information and that may be accessed by the processing unit 231.

Referring to FIG. 1, during operation, the subpack microprocessor 160 generates first and second control signals A, B to induce the first and second subpack contactors 171, 172, respectively to have a closed operational state.

Further, the subpack microprocessor 160 receives a voltage value associated with the first battery cell 131 from the RF receiver 148. The subpack microprocessor 160 determines that the first battery cell 131 has an overvoltage condition when the voltage value is greater than a threshold voltage value. Further, the subpack microprocessor 160 sends an overvoltage message to the master controller 40 via the first and second CAN transceivers 164, 222. As shown, the first and second CAN transceivers 164, 222 operably communicate with one another through the communication bus 80.

Still further, the subpack microprocessor 160 stops generating the first and second control signals to induce the first and second subpack contactors 171, 172, respectively to have an open operational state when the master controller 40 sends an open command to the subpack microprocessor 160 via the first and second CAN transceivers 164, 222 or when no open command is received from the master controller 40 within a predetermined time after sending the overvoltage message.

The first subpack contactor 171 is electrically connected to the electrical node 201 via the electrical line 191. Further, the first subpack contactor 171 is electrically connected to the first pack contactor 51 via the electrical line 71.

The second subpack contactor 172 is electrically connected to the electrical node 203 via the electrical line 195. Further, the second subpack contactor 172 is electrically connected to the second pack contactor 52 via the electrical line 73.

The second battery subpack 32 is electrically connected in parallel with the first battery subpack 31. The second battery subpack 32 has an identical circuit as the first battery subpack 31 and includes battery cells, a cell monitoring circuit, an RF transmitter, a subpack microprocessor, and a CAN transceiver. As shown, the second battery subpack 32 is electrically connected to the electrical lines 71, 73. Alternately, additional battery subpacks are electrically connected in parallel with the first and second battery subpacks 31, 32 and have identical circuits as the subpacks 31, 32.

The master controller 40 is provided to communicate with the first and second battery subpacks 31, 32 and the vehicle controller 26. Further, the master controller 40 is provided to control an operational state of the first and second pack contactors 51, 52 for controlling whether an operational voltage is applied to the vehicle powertrain 24. The master controller 40 includes a master microprocessor 220, a second CAN transceiver 222, and a communication bus 224. The master microprocessor 220 is operably connected to the second CAN transceiver 222 utilizing the communication bus 224. The master microprocessor 220 operably communicates with the vehicle controller 26 via the communication bus 81. Further, the master microprocessor 220 is operably connected to the first and second pack contactors 51, 52. The master microprocessor 220 has an identical internal circuit as the subpack microprocessor 160.

During operation, the master controller 40 generates third and fourth control signals C, D to induce the first and second pack contactors 51, 52, respectively to have a closed operational state.

Further, the master controller 40 receives an overvoltage message from the subpack microprocessor 160 via the first and second CAN transceivers 164, 222. Still further, the master controller 40 sends an open command to the subpack microprocessor 160 to open the first and second subpack contactors 171, 172 when the master controller 40 receives the overvoltage message from the subpack microprocessor 160.

The vehicle powertrain 24 receives an operational voltage from the first battery subpack 31 when the first and second subpack contactors 171, 172 have a closed operational state, and the first and second pack contactors 51, 52 have a closed operational state. The vehicle powertrain 24 utilizes the operational voltage for powering components in the vehicle powertrain 24.

The vehicle controller 26 operably communicates with the master controller 40 and provides instructions to the master controller 40 for obtaining operational information from the first and second battery subpacks 31, 32. The vehicle controller 26 further controls operation of the vehicle powertrain 24.

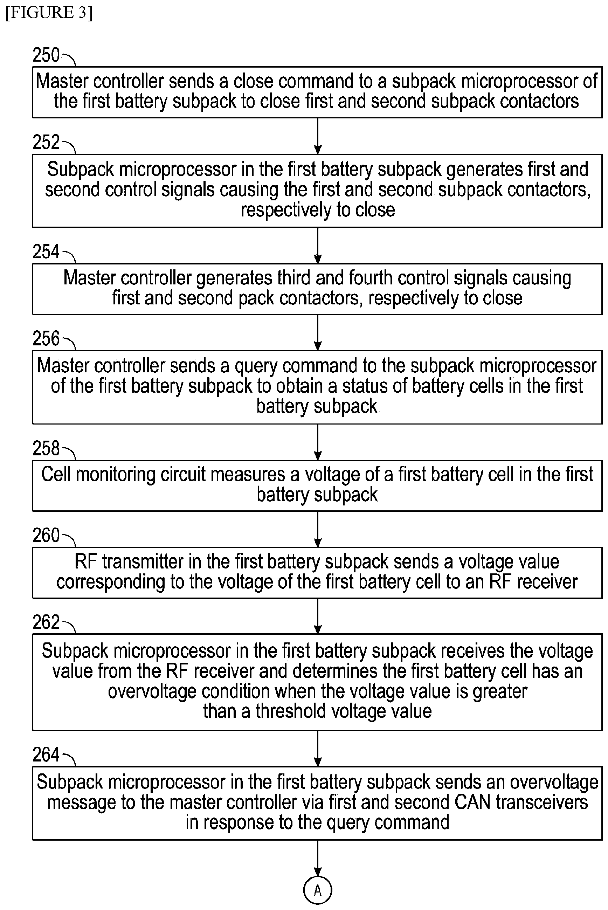

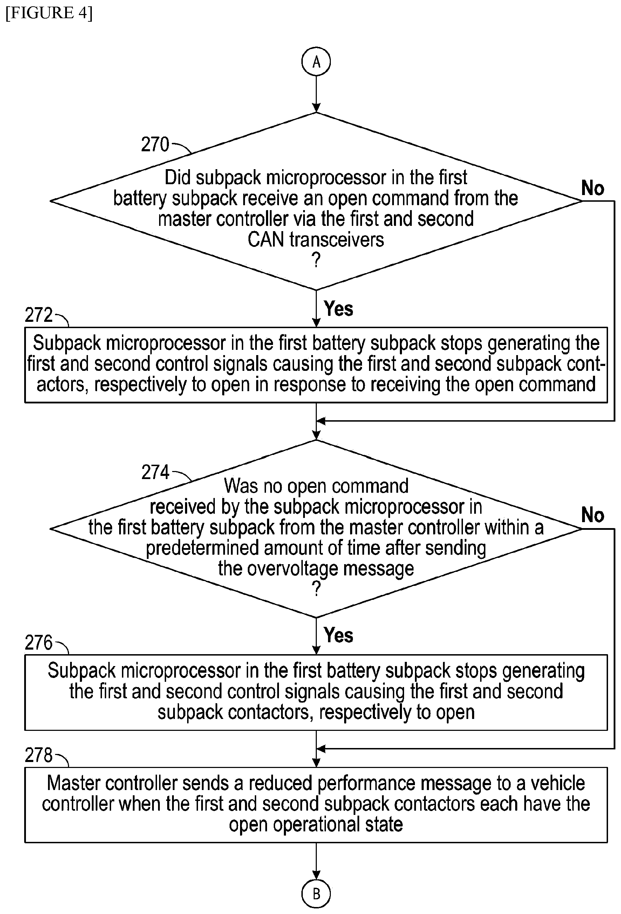

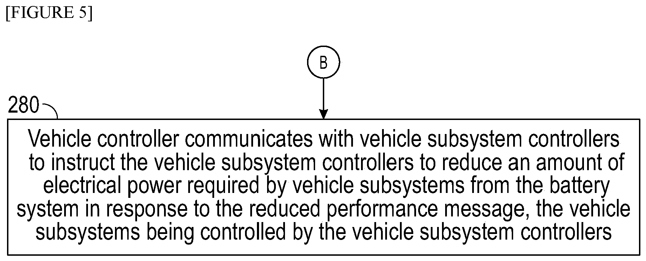

Referring to FIGS. 1 and 3-5, a flowchart of a method for operating the battery system 22 in the vehicle 20 will now be explained. For purposes of simplicity, only the operation of the first battery subpack 31 will be discussed in the flowchart.

At step 250, the master controller 40 sends a close command to a subpack microprocessor 160 of the first battery subpack 31 to close first and second subpack contactors 171, 172. After step 250 the method advances to step 252.

At step 252, the subpack microprocessor 160 in the first battery subpack 31 generates first and second control signals causing the first and second subpack contactors 171, 172, respectively to close. After step 252, the method advances to step 254.

At step 254, the master controller 40 generates third and fourth control signals causing first and second pack contactors 51, 52, respectively to close. After step 254, the method advances to step 256.

At step 256, the master controller 40 sends a query command to the subpack microprocessor 160 of the first battery subpack 31 to obtain a status of battery cells in the first battery subpack 31. After step 256, the method advances to step 258.

At step 258, the cell monitoring circuit 140 measures a voltage of a first battery cell 131 in the first battery subpack 31. After step 258, the method advances to step 260.

At step 260, the RF transmitter 144 in the first battery subpack 31 sends a voltage value corresponding to the voltage of the first battery cell 131 to an RF receiver 148. After step 260, the method advances to step 262.

At step 262, the subpack microprocessor 160 in the first battery subpack 31 receives the voltage value from the RF receiver 148 and determines the first battery cell 131 has an overvoltage condition when the voltage value is greater than a threshold voltage value. After step 262, the method advances to step 264.

At step 264, the subpack microprocessor 160 in the first battery subpack 31 sends an overvoltage message to the master controller 40 via first and second CAN transceivers 164, 222 in response to the query command. After step 264, the method advances to step 270.

At step 270, the subpack microprocessor 160 makes a determination as to whether the subpack microprocessor 160 received an open command from the master controller 40 via the first and second CAN transceivers 164, 222. If the value of step 270 equals "yes", the method advances to step 272. Otherwise, the method advances to 274.

At step 272, the subpack microprocessor 160 in the first battery subpack 31 stops generating the first and second control signals causing the first and second subpack contactors 171, 172, respectively to open in response to receiving the open command. After step 272, the method advances to step 274.

At step 274, the subpack microprocessor makes a determination as to whether no open command was received by the subpack microprocessor 160 from the master controller 40 within a predetermined time after sending the overvoltage message. If the value of step 274 equals "yes", the method advances to step 276. Otherwise, the method advances to step 278.

At step 276, the subpack microprocessor 160 in the first battery subpack 31 stops generating the first and second control signals causing the first and second subpack contactors 171, 172, respectively to open. After step 276, the method advances to step 278.

At step 278, the master controller 40 sends a reduced performance message to a vehicle controller 26 when the first and second subpack contactors 171, 172 each have the open operational state. The reduced performance message indicates that the battery system 22 can only provide a reduced amount of electrical power since the first battery subpack 31 is disconnected from the other battery packs.

At step 280, the vehicle controller 26 communicates with vehicle subsystem controllers 27 to instruct the vehicle subsystem controllers 27 to reduce an amount of electrical power required by vehicle subsystems 28 from the battery system 22 in response to the reduced performance message. The vehicle subsystems 28 are controlled by the vehicle subsystem controllers 27.

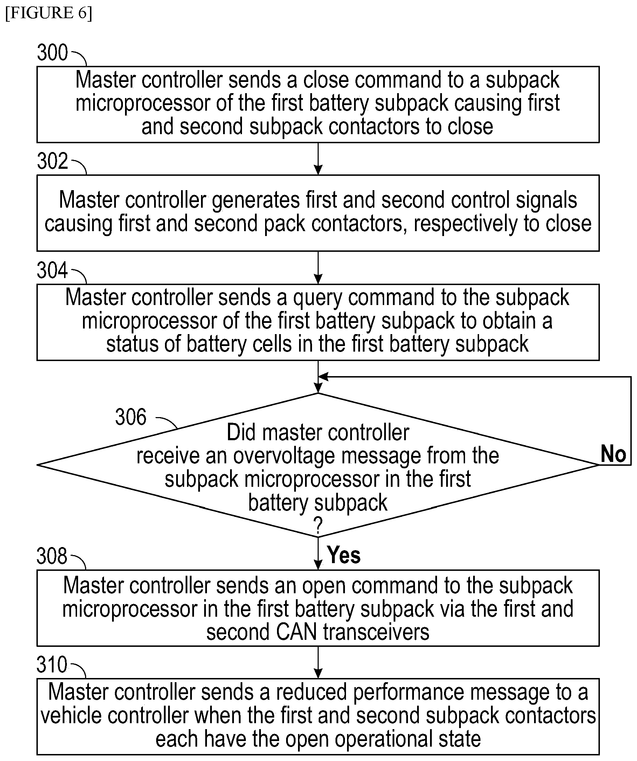

Referring to FIG. 6, a flowchart of a method implemented by the master controller 40 will now be explained.

At step 300, the master controller 40 sends a close command to a subpack microprocessor 160 of the first battery subpack 31 causing first and second subpack contactors 171, 172 to close. After step 300, the method advances to step 302.

At step 302, the master controller 40 generates first and second control signals C, D, causing first and second pack contactors 51, 52, respectively to close. After step 302, the method advances to step 304.

At step 304, the master controller 40 sends a query command to the subpack microprocessor 160 of the first battery subpack 31 to obtain a status of battery cells in the first battery subpack 31. After step 304, the method advances to step 306.

At step 306, the master controller 40 makes a determination as to whether the master controller 40 received an overvoltage message from the subpack microprocessor 160 in the first battery subpack 31. If the value of step 306 equals "yes", the method advances to step 308. Otherwise, the method returns to step 306.

At step 308, the master controller 40 sends an open command to the subpack microprocessor 160 in the first battery subpack 31 via the first and second CAN transceivers 164, 222. After step 308, the method advances to step 310.

At step 310, the master controller 40 sends a reduced performance message to a vehicle controller 26 when the first and second subpack contactors 171, 172 each have the open operational state.

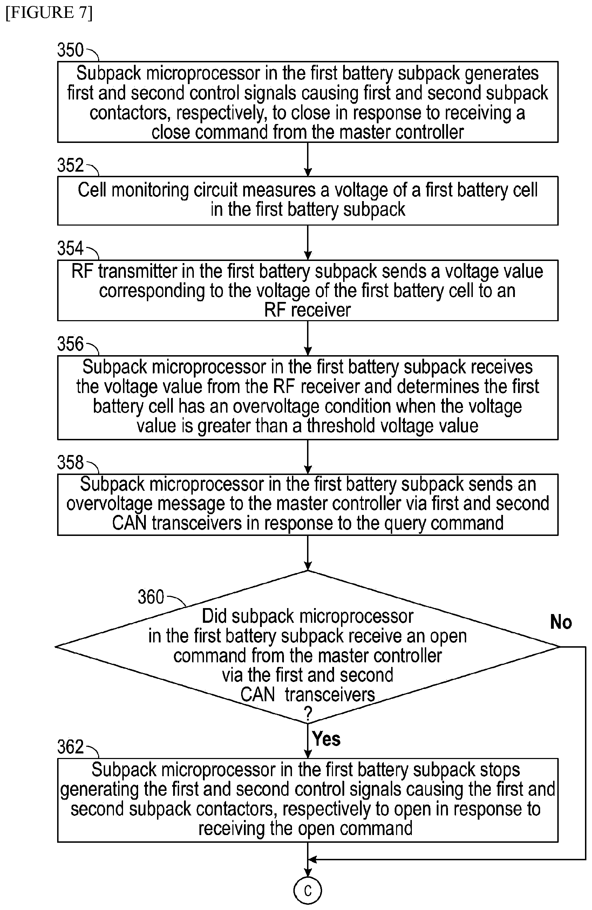

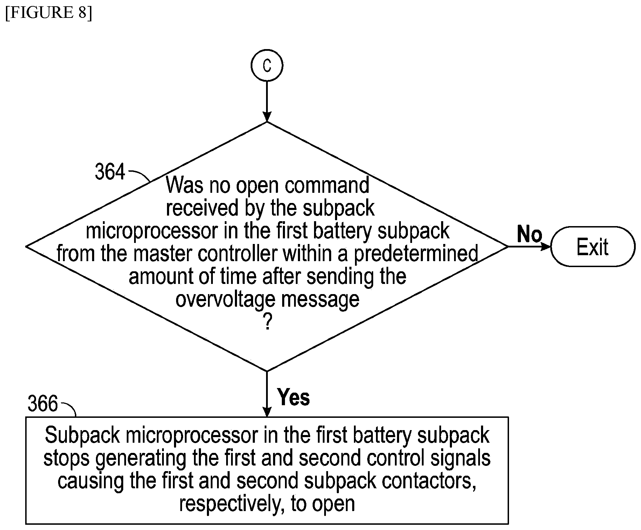

Referring to FIGS. 7 and 8, a flowchart of a method implemented by the first battery subpack 31 will now be explained.

At step 350, the subpack microprocessor 160 in the first battery subpack 31 generates first and second control signals A, B, causing first and second subpack contactors 171, 172, respectively, to close in response to receiving a close command from the master controller 40. After step 350, the method advances to step 352.

At step 352, the cell monitoring circuit 140 measures a voltage of a first battery cell 131 in the first battery subpack 31. After step 352, the method advances to step 354.

At step 354, the RF transmitter 144 in the first battery subpack 31 sends a voltage value corresponding to the voltage of the first battery cell 131 to an RF receiver 148. After step 354, the method advances to step 356.

At step 356, the subpack microprocessor 160 in the first battery subpack 31 receives the voltage value from the RF receiver 148 and determines the first battery cell 131 has an overvoltage condition when the voltage value is greater than a threshold voltage value. After step 356, the method advances to step 358.

At step 358, the subpack microprocessor 160 in the first battery subpack 31 sends an overvoltage message to the master controller 40 via first and second CAN transceivers 164, 222 in response to the query command. After step 358, the method advances to step 360.

At step 360, the subpack microprocessor 160 in the first battery subpack 31 makes a determination as to whether the subpack microprocessor 160 received an open command from the master controller 40 via the first and second CAN transceivers 164, 222. If the value of step 360 equals "yes", the method advances to step 362. Otherwise, the method advances to step 364.

At step 362, the subpack microprocessor 160 in the first battery subpack 31 stops generating the first and second control signals A, B, causing the first and second subpack contactors 171, 172, respectively to open in response to receiving the open command. After step 362, the method advances to step 364.

At step 364, the subpack microprocessor 160 in the first battery subpack 31 makes a determination as to whether the subpack microprocessor 160 did not receive an open command from the master controller 40 within a predetermined time after sending the overvoltage message. If the value of step 364 equals "yes", the method advances to step 366. Otherwise, the method is exited.

At step 366, the subpack microprocessor 160 in the first battery subpack 31 stops generating the first and second control signals A, B, causing the first and second subpack contactors 171, 172, respectively, to open.

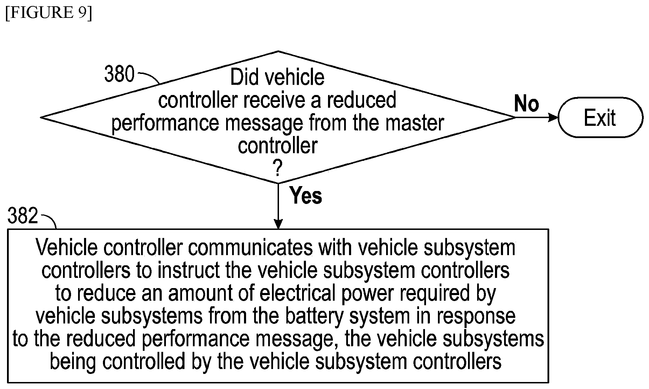

Referring to FIG. 9, a flowchart of a method implemented by the vehicle controller 26 will now be explained.

At step 380, the vehicle controller 26 makes a determination as to whether the vehicle controller 26 received a reduced performance message from the master controller 40. If the value of step 380 equals "yes", the method advances to step 382. Otherwise, the method is exited.

At step 382, the vehicle controller 26 communicates with vehicle subsystem controllers 27 to instruct the vehicle subsystem controllers 27 to reduce an amount of electrical power required by vehicle subsystems 28 from the battery system 22 in response to the reduced performance message. The vehicle subsystems 28 are controlled by the vehicle subsystem controllers 27.

It is noted that although the battery system 22 has been utilized in a vehicle herein, in an alternate design the battery system 22 could be utilized in a stationary energy storage system (ESS) that supplies electrical power to any desired electrical load (other than a vehicle powertrain).

While the claimed system has been described in detail in connection with only a limited number of systems, it should be readily understood that the system is not limited to such disclosed system Rather, the claimed system can be modified to incorporate any number of variations, alterations, substitutions or equivalent arrangements not heretofore described, but which are commensurate with the spirit and scope of the disclosure. Additionally, while various aspects of the claimed system have been described, it is to be understood that aspects of the system may include only some of the described aspects. Accordingly, the claimed system is not to be seen as limited by the foregoing description.

The embodiments of the present disclosure described above may not be implemented only through an apparatus and a method, but may be implemented through a program that realizes a function corresponding to the configuration of the embodiments of the present disclosure or a recording medium on which the program is recorded. The program or recording medium may be easily implemented by those skilled in the art from the above description of the embodiments.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

Additionally, many substitutions, modifications and changes may be made to the present disclosure described hereinabove by those skilled in the art without departing from the technical aspects of the present disclosure, and the present disclosure is not limited to the above-described embodiments and the accompanying drawings, and each embodiment may be selectively combined in part or in whole to allow various modifications.

### [Explanation of symbols]

20: vehicle
22: battery system
24: vehicle powertrain
26: vehicle controller
27: vehicle subsystem controllers
28: vehicle subsystems
31: first battery subpack
32: second battery subpack
40: master controller
51: first pack contactor
52: second pack contactor
71-74: electrical lines
80, 81: communication buses
131: first battery cell
132: second battery cell
140: cell monitoring circuit
144: RF transmitter
148: RF receiver
160: subpack microprocessor
164: first CAN transceiver
171: first subpack contactor
172: second subpack contactor
181, 182: communication buses
191-196: electrical lines
201-203: electrical nodes
220: master microprocessor
222: second CAN transceiver
231: processing unit
232: RAM
233: ROM
234: input/output device
235: memory
236: operating system
238: application programs
237: database
239: communication interface

## Claims

1. A battery system, comprising:
a battery subpack having first and second battery cells electrically connected in series to one another, a cell monitoring circuit, an RF transmitter, an RF receiver, a subpack microprocessor, and a first transceiver; the cell monitoring circuit being operably connected to the first and second battery cells and the RF transmitter, the subpack microprocessor being operably connected to the RF receiver and the first transceiver, the cell monitoring circuit measuring a voltage of the first battery cell;
a master controller having a second transceiver that communicates with the first transceiver;
the RF transmitter of the battery subpack sending a voltage value corresponding to the voltage of the first battery cell to the RF receiver;
the subpack microprocessor receiving the voltage value from the RF receiver and determining the first battery cell has an overvoltage condition based on the voltage value;
the subpack microprocessor sending an overvoltage message to the master controller via the first and second transceivers; and
the subpack microprocessor inducing first and second subpack contactors to each have an open operational state when the master controller sends an open command to the subpack microprocessor via the first and second transceivers.

2. The battery system of claim 1, wherein:
the first subpack contactor being connected to a positive terminal of the first battery cell; and
the second subpack contactor being connected to a negative terminal of the second battery cell.

3. The battery system of claim 1, wherein:
the subpack microprocessor inducing the first and second subpack contactors to each have the open operational state when no open command is received from the master controller within a predetermined time after sending the overvoltage message.

4. The battery system of claim 1, wherein:
the subpack microprocessor determining the first battery cell has the overvoltage condition when the voltage value is greater than a threshold voltage value.

5. The battery system of claim 1, wherein:
the master controller sending the open command to the subpack microprocessor via the first and second transceivers when the master controller receives the overvoltage message.

6. The battery system of claim 1, further comprising:
a first pack contactor electrically connected to the first subpack contactor; and
a second pack contactor electrically connected to the second subpack contactor.

7. The battery system of claim 1, wherein:
the master controller having a master microprocessor operably connected to the second transceiver, the second transceiver operably communicating with the first transceiver, the first transceiver being a first CAN transceiver, and the second transceiver being a second CAN transceiver.

8. The battery system of claim 1, wherein:
the master controller sending a reduced performance message to a vehicle controller when the first and second subpack contactors each have the open operational state.

9. A battery system, comprising:
a battery subpack having first and second battery cells electrically connected in series to one another, a cell monitoring circuit, an RF transmitter, an RF receiver, a subpack microprocessor, and a first transceiver; the cell monitoring circuit being operably connected to the first and second battery cells and the RF transmitter, the subpack microprocessor being operably connected to the RF receiver and the first Transceiver, the cell monitoring circuit measuring a voltage of the first battery cell;
a master controller having a second transceiver that communicates with the first transceiver;
the RF transmitter of the battery subpack sending a voltage value corresponding to the voltage of the first battery cell to the RF receiver;
the subpack microprocessor receiving the voltage value from the RF receiver and determining the first battery cell has an overvoltage condition based on the voltage value;
the subpack microprocessor sending an overvoltage message to the master controller via the first and second transceivers; and
the subpack microprocessor inducing first and second subpack contactors to each have an open operational state when no open command is received from the master controller within a predetermined amount of time after sending the overvoltage message.

10. The battery system of claim 9, further comprising:
the first subpack contactor being connected to a positive terminal of the first battery cell; and
the second subpack contactor being connected to a negative terminal of the second battery cell.

11. The battery system of claim 9, wherein:
the subpack microprocessor determining the first battery cell has the overvoltage condition when the voltage value is greater than a threshold voltage value.

12. The battery system of claim 9, wherein:
the master controller sending the open command to the subpack microprocessor via the first and second transceivers when the master controller receives the overvoltage message.

13. The battery system of claim 9, further comprising:
a first pack contactor electrically connected to the first subpack contactor; and
a second pack contactor electrically connected to the second subpack contactor.

14. The battery system of claim 9, wherein:
the master controller having a master microprocessor operably connected to the second transceiver, the second transceiver operably communicating with the first transceiver, the first transceiver being a first CAN transceiver, and the second transceiver being a second CAN transceiver.

15. The battery system of claim 9, wherein:
the master controller sending a reduced performance message to a vehicle controller when the first and second subpack contactors each have the open operational state.

16. A battery system, comprising:
a battery subpack having first and second battery cells electrically connected in series to one another, a cell monitoring circuit, an RF transmitter, an RF receiver, a subpack microprocessor, and a first transceiver; the cell monitoring circuit being operably connected to the first and second battery cells and the RF transmitter, the subpack microprocessor being operably connected to the RF receiver and the first transceiver, the cell monitoring circuit measuring a voltage of the first battery cell;
a master controller having a second transceiver that communicates with the first transceiver;
the RF transmitter of the battery subpack sending a voltage value corresponding to the voltage of the first battery cell to the RF receiver;
the subpack microprocessor receiving the voltage value from the RF receiver and determining the first battery cell has an overvoltage condition based on the voltage value;
the subpack microprocessor sending an overvoltage message to the master controller via the first and second transceivers; and
the subpack microprocessor inducing first and second subpack contactors to each have an open operational state when the master controller sends an open command to the subpack microprocessor via the first and second transceivers or when no open command is received from the master controller within a predetermined amount of time after sending the overvoltage message.

17. The battery system of claim 16, wherein:
the subpack microprocessor determining the first battery cell has the overvoltage condition when the voltage value is greater than a threshold voltage value.

18. The battery system of claim 16, wherein:
the master controller sending the open command to the subpack microprocessor via the first and second transceivers when the master controller receives the overvoltage message, the first transceiver being a first CAN transceiver, and the second transceiver being a second CAN transceiver.

19. The battery system of claim 16, further comprising:
a first pack contactor electrically connected to the first subpack contactor; and
a second pack contactor electrically connected to the second subpack contactor.

20. The battery system of claim 16, wherein:
the master controller sending a reduced performance message to a vehicle controller when the first and second subpack contactors each have the open operational state.
